# EUROPEAN PATENT SPECIFICATION

(11) **EP 3 036 985 B1**
(45) Date of publication and mention of the grant of the patent: **03.05.2017**
(21) Application number: 14199575.3
(22) Date of filing: 22.12.2014
(51) Int. Cl.: A01D 84/00

(54) **Haymaking machine for gathering cut fodder in longitudinal heaps**
Heuerntemaschine zum Sammeln von geschnittenem Futter in Längshaufen
Machine de fenaison pour collecter du fourrage coupé en piles longitudinales

(43) Date of publication of application: 29.06.2016
(73) Proprietor: Frandent Group S.r.l., 10060 Osasco (TO) (IT)
(72) Inventor: Bruno, Ezio, 10060 Osasco (Torino) (IT); Rossi, Federico, 10121 Torino (IT); Speziani, Daniele, 10125 Torino (IT); Trevini, Mattia, 25015 Desenzano del Garda (Brescia) (IT)
(74) Representative: Marchitelli, Mauro

(56) References cited:
- EP-A1- 0 039 286
- WO-A1-85/00088
- DE-A1- 3 615 172
- DE-A1- 3 642 601
- DE-A1- 3 703 673
- FR-A1- 2 437 771

## Description

### Field of the invention

The present invention refers to haymaking machines and relates to a machine for gathering cut fodder in longitudinal heaps, also known as swaths.

### Description of the related art

Baling machines used for gathering and compressing fodder bales usually require that the fodder scattered on a field for natural drying is grouped into swaths before collection.

For grouping fodder in swaths, machines known as hay rakes or swathers are used, which include rotating rakes which displace laterally the mass of fodder, thereby forming longitudinal heaps or swaths.

The main requirements for the swathing operations are the following:
- avoiding contamination of the fodder with soil, stones, metal parts, etc..;
- collecting fodder gently to avoid loss of product;
- high operating speed;
- low power requirements and low power consumption;
- reduced weight to prevent crushing and damaging the product;
- avoiding the risk of breakage of tools that can pollute the product.

The document WO85/00088 discloses a haymaking machine for spreading, turning, or gathering in swaths cut fodder, comprising a frame carrying in its lower part an air nozzle with a triangular shape, which divides the cut fodder in two from the center towards the exterior and comprising two outer panels which hold the fodder pushed outwards for the formation of longitudinal heaps or swaths.

Although gathering of the fodder by means of an air flow has considerable advantages with respect to gathering systems using mechanical rakes, the solution described in the document WO85/00088 has never given rise to actual operating machines available on the market for the low gathering efficiency as compared to the traditional mechanical solutions.

### Object and summary of the invention

The object of the present invention is to provide a machine for gathering cut fodder in longitudinal heaps, which would allow to meet the market demands and solve the problems of the prior art.

According to the present invention, this object is achieved by a machine having the characteristics forming the subject of claim 1.

The claims are an integral part of the teaching given in relation to the invention.

### Brief description of the drawings

The present invention will now be described in detail with reference to the accompanying drawings, given purely by way of non-limiting example, in which:
- Figure 1 is a perspective view of a machine according to the present invention,
- Figure 2 is a schematic plan view of the machine of Figure 1,
- Figure 3 is a cross-section along the line III-III of Figure 1, and
- Figure 4 is a cross-section similar to Figure 3 showing a variant of the present invention.

### Detailed description

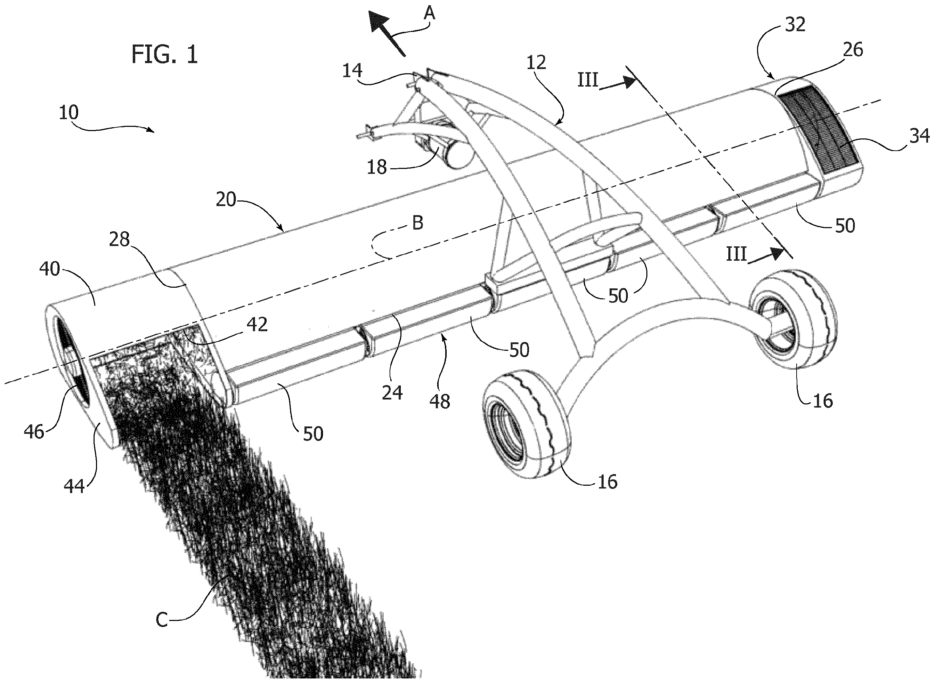

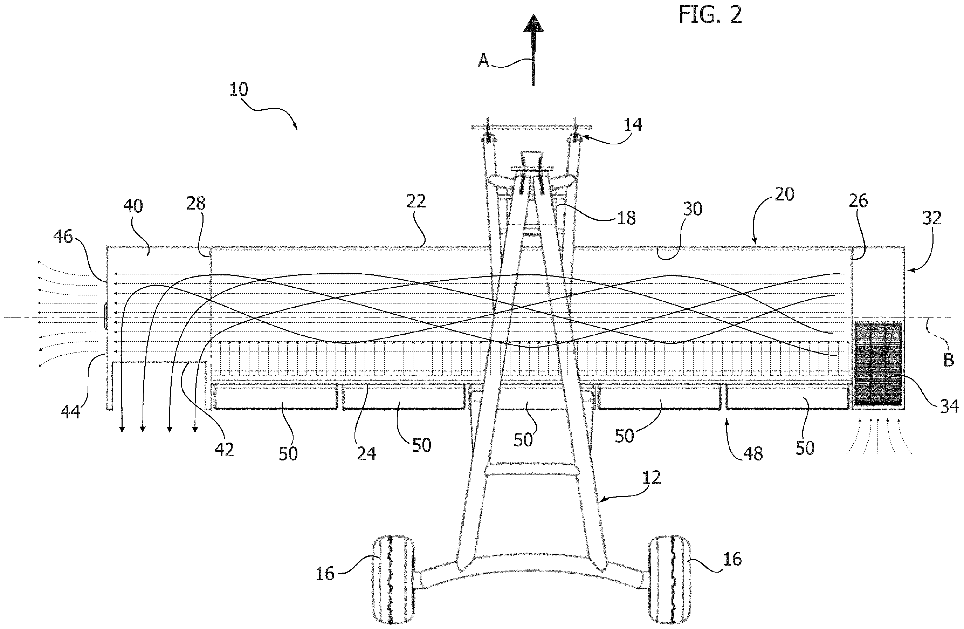

With reference to the drawings, numeral 10 indicates a haymaking machine suitable for collecting cut fodder in longitudinal heaps or swaths indicated with C in Figure 1. The machine 10 is intended to be towed by an agricultural tractor in the direction indicated by the arrow A in figures 1 and 2.

The machine 10 comprises a support frame 12 formed by tubular metal elements bent and welded together. The support frame 12 has a front bracket 14 intended to be connected to a three-point hitch set on the rear part of an agricultural tractor. The support frame 12 is provided with two rear idle wheels 16 that roll on the ground. The support frame 12 carries an electric generator 18 located in the front of the support frame 12 and provided with a coupling intended to be connected to a rear power take off of the tractor.

The machine 10 comprises a tubular conveyor 20 carried by the support frame 12. The tubular conveyor 20 is formed by an outer wall open at the bottom which encloses a gathering chamber 30 facing the ground. The tubular conveyor 20 is elongated along a transverse axis B orthogonal to the direction of movement A. The tubular conveyor 20 has a front edge 22 and a rear edge 24 which delimit the collection chamber 30 on the front side and rear side. The tubular conveyor 20 has a first lateral end 26 and a second lateral end 28.

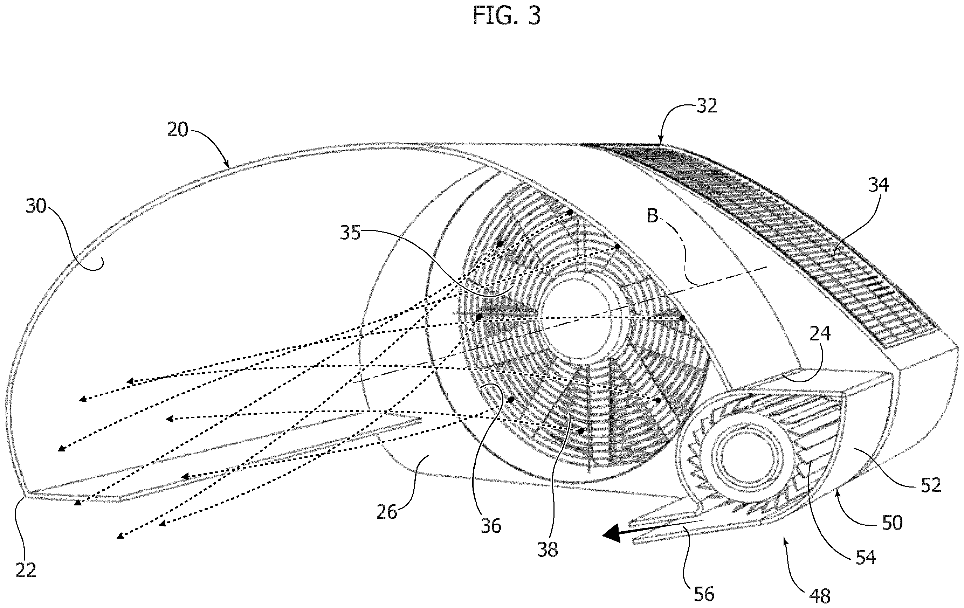

An axial fan 32 is fixed to the first lateral end 26 of the tubular conveyor 20. The axial fan 32 comprises an outer casing provided with an air inlet 34. A fan 35 (Figure 3) is mounted inside the housing and is driven by an electric motor powered by the electric generator 18. The fan 35 is rotatable about an axis parallel to the axis B of the tubular conveyor 20. The fan 35 is positioned facing an air flow outlet opening 36 located at one lateral end of the gathering chamber 30. The air flow outlet opening 36 is closed by a grid 38.

The axial fan 32 generates within the gathering chamber 30 an air flow parallel to the axis B. The air flow transports within the collection chamber 30 the fodder located on the stretch of ground covered by the tubular conveyor 20. The air flow generated by the axial fan 32 sweeps the fodder from the first end 26 towards the second end 28 of the tubular conveyor 20. A discharge element 40 is fixed to the second end 28 of the tubular conveyor 20. The discharge element 40 outlet has an inlet opening facing the gathering chamber 30 and a rear mouth 42 through which the fodder transported by the air flow into the gathering chamber 30 is discharged. The discharge element 40 has a side wall 44 which may be provided with a grid 46 for the discharge of the air flow. At the exit the rear mouth 42 of the discharge element 40 the fodder forms a longitudinal heap or swath C (Figure 1) parallel to the moving direction A of the machine 10.

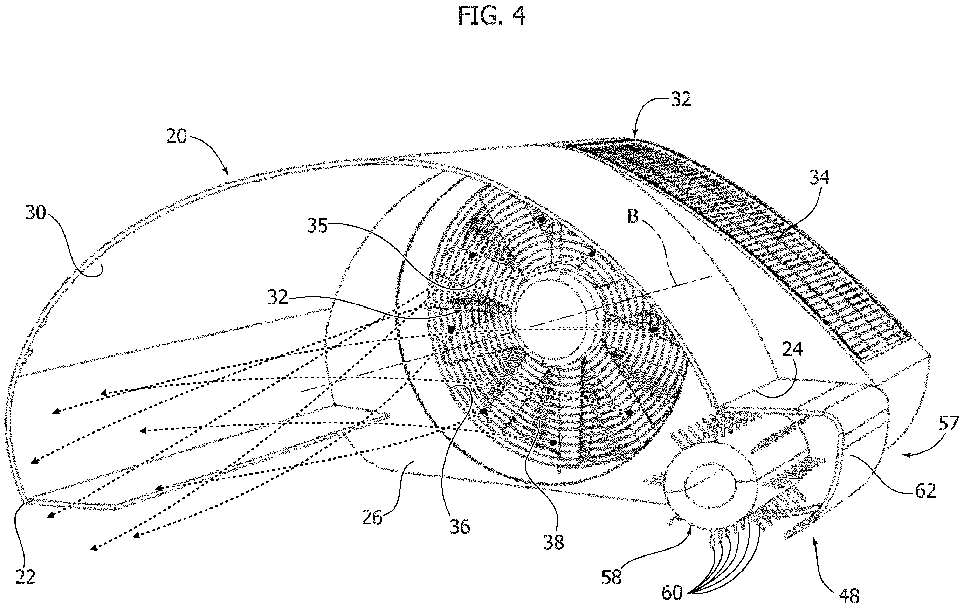

The machine 10 comprises an electrically operated fodder lifting device 48 set along the rear edge 24 of the tubular conveyor 20. The lifting device 48 has the purpose of lifting from the ground the fodder in correspondence with the rear edge 24. The fodder which is raised the fodder lifting device 48 is invested by the air flow generated by the axial fan 32 and is transported to the discharge element 40. The fodder lifting device 48 can be pneumatic or mechanical. In the embodiment illustrated in Figures 1 to 3 the fodder lifting device 48 is pneumatic. In Figure 4 there is illustrated a mechanic forage lifting device 48.

With reference to figures 1 to 3, the fodder lifting device 48 comprises a plurality of centrifugal fans 50 fixed to the rear edge 24 of the tubular conveyor 20 and adjacent to each other in a direction parallel to axis B. Each centrifugal fan 50 is elongated in a direction parallel to the axis B. The centrifugal fans 50 are provided with respective electric motors powered by the electrical generator 18.

With reference to Figure 3, each centrifugal fan 50 includes a housing 52 within which is rotatably mounted a rotor 54 driven in rotation by an electric motor. The housing 52 has a nozzle 56 from which an air stream produced by the rotor 54 comes out. The air stream is oriented downward and toward the front of the gathering chamber 30.

In the variant shown in Figure 4, the fodder lifting device 48 comprises a plurality of rotary brushes 57 fixed to the rear edge 24 of the conveyor tube 20. The rotary brushes 57 are elongated in a direction parallel to the axis B and are adjacent to each other along the back edge 24. Each rotary brush 57 comprises a rotary shaft 58 provided on its outer surface with radial combs 60. The shaft 58 of each rotary brush 57 is driven in rotation about an axis parallel to the axis B by a respective electric motor powered by the generator 18. The rotary shaft 58 is surrounded by a casing 62 open towards the gathering chamber 30.

The machine according to the present invention gathers the fodder and forms the swaths in a gentle way, without damaging the fodder and preventing product losses. Fodder gathering is carried out without mechanical organs contacting the ground, which avoids contamination of fodder with earth, stones etc.. It is also prevented the risk that broken teeth or prongs end up in the fodder. The speed of the machine is higher than the speed of the most modern swathers available on the market. The power used by the machine is very low so tractors with low power and low fuel consumption can be used. The weight of the machine 10 is very small compared to the mechanical rotary swathers available on the market. Thanks to the reduced weight, the support frame 12 may be devoid of the wheels 16 and may be connected in overhang to the three point hitch of the tractor.

Of course, without prejudice to the principle of the invention, the details of construction and forms of embodiment may be varied widely with respect to those described and illustrated without departing from the scope of the invention as defined by the claims that follow.

## Claims

1. A haymaking machine for gathering cut fodder in longitudinal heaps, comprising:
- a support frame (12) provided with a front attachment (14) for connection to an agricultural tractor,
- an electric generator (18) carried by the support frame (12) and intended to be connected to a power take off of the tractor,
- a tubular conveyor (20) open at the bottom enclosing a gathering chamber (30) elongated along a transverse axis (B), the tubular conveyor (20) having a front edge (22), a rear edge (24), a first end (26) and a second end (28),
- an axial fan (32) including an electric motor powered by said electric generator (18), the axial fan (32) being fixed to said first end (26) of said tubular conveyor (20) and having a fan (35) rotatable about an axis parallel to said transverse axis (B), to generate an air flow inside said tubular conveyor (20) directed from said first end (26) toward said second end (28),
- a discharge element (40) fixed to said second end (28) of the tubular conveyor (20), having an inlet opening communicating with said gathering chamber (30) and a rear mouth (42) for the discharge in longitudinal heaps (C) of the fodder conveyed by said air flow towards said second end (28), and
- an electrically operated fodder lifting device (48), fixed to said rear edge (24) of said tubular conveyor (20).

2. A haymaking machine according to claim 1, wherein said fodder lifting device (48) comprises a plurality of centrifugal fans (50) adjacent to each other in the transverse direction, each of said centrifugal fans (50) comprising a casing (52) within which is rotatably mounted a rotor (54) driven by a respective electric motor powered by said electric generator (18), said centrifugal fans (50) being arranged to generate respective air flows directed towards the inside of said tubular conveyor (20).

3. A haymaking machine according to claim 1, wherein said fodder lifting device (48) comprises a plurality of rotating brushes (57) fixed to the rear edge (24) of the conveyor tube (20) and adjacent to each other in the transverse direction, each of said rotating brushes (57) comprising a casing (62) open towards the interior of said conveyor tube (20) and a rotating shaft (58) provided with a plurality of combs (60) and driven in rotation by a respective electric motor powered by said electric generator (18).

## Patentansprüche

1. Heuerntemaschine zum Sammeln von geschnittenem Futter in Längshaufen, umfassend:
- einen Tragrahmen (12), der mit einem Frontanbau (14) zur Verbindung mit einem landwirtschaftlichen Zugfahrzeug bereitgestellt ist,
- einen vom Tragrahmen (12) getragenen elektrischen Generator (18), der dazu vorgesehen ist, mit einem Nebenabtrieb des Zugfahrzeugs verbunden zu sein,
- einen unten offenen rohrförmigen Förderer (20), der eine in einer Querachse (B) gestreckte Sammelkammer (30) einschließt, wobei der rohrförmige Förderer (20) eine vordere Kante (22), eine hintere Kante (24), ein erstes Ende (26) und ein zweites Ende (28) aufweist,
- einen Axiallüfter (32), der einen vom elektrischen Generator (18) versorgten Elektromotor einschließt, wobei der Axiallüfter (32) am ersten Ende (26) des rohrförmigen Förderers (20) befestigt ist und einen Lüfter (35) aufweist, der um eine zur Querachse (B) parallele Achse drehbar ist, um innerhalb des rohrförmigen Förderers (20) einen vom ersten Ende (26) zum zweiten Ende (28) gerichteten Luftstrom zu erzeugen,
- ein am zweiten Ende (28) des rohrförmigen Förderers (20) befestigtes Austragselement (40) mit einer Einlassöffnung, die mit der Sammelkammer (30)in Verbindung steht, und einer hinteren Mündung (42) für den Austrag des durch den Luftstrom zum zweiten Ende (28) geförderten Futters in Längshaufen (C), und
- eine elektrisch betriebene Futterhebevorrichtung (48), die an der hinteren Kante (24) des rohrförmigen Förderers (20) befestigt ist.

2. Heuerntemaschine nach Anspruch 1, wobei die Futterhebevorrichtung (48) eine Mehrzahl an Zentrifugallüftern (50) umfasst, die in der Querrichtung zueinander benachbart sind, wobei jeder der Zentrifugallüfter (50) ein Gehäuse (52) umfasst, in dem ein Rotor (54) drehbar angebracht ist, der durch einen jeweiligen, vom elektrischen Generator (18) versorgten Elektromotor angetrieben wird, wobei die Zentrifugallüfter (50) gestaltet sind, jeweilige Luftströme zu erzeugen, die in das Innere des rohrförmigen Förderers (20) gerichtet sind.

3. Heuerntemaschine nach Anspruch 1, wobei die Futterhebevorrichtung (48) eine Mehrzahl rotierender Bürsten (57) umfasst, die an der hinteren Kante (24) des Förderrohrs (20) befestigt und in der Querrichtung zueinander benachbart sind, wobei jede der rotierenden Bürsten (57) ein zum Inneren des Förderrohrs (20) offenes Gehäuse (62) und eine rotierende Welle (58), die mit einer Mehrzahl von Kämmen (60) bereitgestellt ist und durch einen jeweiligen, vom elektrischen Generator (18) versorgten Elektromotor rotierend angetrieben wird, umfasst.

## Revendications

1. Machine de fenaison pour collecter du fourrage coupé en piles longitudinales, comprenant :
un bâti de support (12) prévu avec une fixation avant (14) pour le raccordement à un tracteur agricole,
un générateur électrique (18) porté par le bâti de support (12) et prévu pour être raccordé à une prise de force du tracteur,
un transporteur tubulaire (20) ouvert au niveau du fond enfermant une chambre de collecte (30) allongée le long d'un axe transversal (B), le transporteur tubulaire (20) ayant un bord avant (22), un bord arrière (24), une première extrémité (26) et une seconde extrémité (28),
un ventilateur axial (32) comprenant un moteur électrique alimenté par ledit générateur électrique (18), le ventilateur axial (32) étant fixé sur ladite première extrémité (26) dudit transporteur tubulaire (20) et ayant un ventilateur (35) pouvant tourner autour d'un axe parallèle audit axe transversal (B), pour générer un écoulement d'air à l'intérieur dudit transporteur tubulaire (20) dirigé de ladite première extrémité (26) vers ladite seconde extrémité (28),
un élément de décharge (40) fixé sur ladite seconde extrémité (28) dudit transporteur tubulaire (20), ayant une ouverture d'entrée communiquant avec ladite chambre de collecte (30) et une bouche arrière (42) pour la décharge en piles longitudinales (C) du fourrage transporté par ledit écoulement d'air vers ladite seconde extrémité (28), et
un dispositif de levage de fourrage électrique (48), fixé sur ledit bord arrière (24) dudit transporteur tubulaire (20).

2. Machine de fenaison selon la revendication 1, dans laquelle ledit dispositif de levage de fourrage (48) comprend une pluralité de ventilateurs centrifuges (50) adjacents entre eux dans la direction transversale, chacun desdits ventilateurs centrifuges (50) comprenant un boîtier (52) à l'intérieur duquel est monté, en rotation, un rotor (54) entraîné par un moteur électrique respectif alimenté par ledit générateur électrique (18), lesdits ventilateurs centrifuges (50) étant agencés pour générer des écoulements d'air respectifs dirigés vers l'intérieur dudit transporteur tubulaire (20).

3. Machine de fenaison selon la revendication 1, dans laquelle ledit dispositif de levage de fourrage (48) comprend une pluralité de brosses rotatives (57) fixées sur le bord arrière (24) du tube transporteur (20) et adjacentes entre elles dans la direction transversale, chacune desdites brosses rotatives (57) comprenant un boîtier (62) ouvert vers l'intérieur dudit tube transporteur (20) et un arbre rotatif (58) prévu avec une pluralité de peignes (60) et entraîné en rotation par un moteur électrique respectif par ledit générateur électrique (18).
